# EUROPEAN PATENT APPLICATION

(11) **EP 3 012 799 A1**
(43) Date of publication of application: **27.04.2016**
(21) Application number: 15190914.0
(22) Date of filing: 21.10.2015
(51) Int. Cl.: G06Q 50/02, G06Q 10/06

(54) **METHOD AND SYSTEM FOR INTEGRATED CROP QUALITY MANAGEMENT AND CROP CERTIFICATION**

(30) Priority: 22.10.2014 IN 3371MU2014
(71) Applicant: Tata Consultancy Services Limited, Mumbai 400 021 (IN)
(72) Inventor: SINGH, Dineshkumar Jang Bahadur, 400601 THANE (IN); KULKARNI, Sonali Vasant, 400601 THANE (IN); KIMBAHUNE, Sanjay M., 400601 THANE (IN)
(74) Representative: Myon, Gérard Jean-Pierre

(57) **Abstract**

A method and system is provided for integrated crop quality management and crop certification comprises of selecting a geographical area for growing a crop, auto assisting a user to select a crop certification of the selected geographical area, generating a customized crop protocol and training calendar ,enabling implementation of the steps involved in growing the crop ,adapting to crop compliance of the crop in the selected geographical area, generating a plurality of periodic compliance alerts for different stages of the crop for growth monitoring, tracking a plurality of action items depicting goals on the generated periodic alerts to maintain a crop compliance business logic of the crop, generating a crop certification compliance score and index for the crop compliance certificate of the crop, transferring the crop certification compliance score and index to the certifying agency for validating and generating a crop compliance certificate.

## Description

### CROSS-REFERENCE TO RELATED APPLICATIONS AND PRIORITY

The present application claims priority from Indian Provisional Patent Application No. 3371/MUM/2014, filed on October 22, 2014, the entirety of which is hereby incorporated by reference.

### FIELD OF THE INVENTION

The present application disclosure relates in general to the field of crop quality management system and crop certification. Particularly, the application provides a method and system to integrate the crop quality management system to provide a cost effective way of crop and other related certifications.

### BACKGROUND OF THE INVENTION

In Food processing industry, food safety is a major concern and ensuring good quality of the food produced by farmers has always been a challenge mainly on managing the crop production cycle and post-harvest management. Crop certification ensures certain aspects of producing quality food, however with the existing crop certifications, usually, there are numerous challenges. One of the prominent challenges is that most of the existing crop certification processes are carried out manually and are paper based. Since implementation of crop certification process involves various stakeholders such as farmers, inspectors, auditors and certifying agencies, the entire manual process may lead to delay in response, low compliance levels and sometimes farmers eventually dropping out of the certification process, thus leading into risk of food borne diseases. Moreover data collected by humans can be erroneous and unreliable.

Though there are many different need-based crop certifications and different standards from different jurisdictions for different crops, there is no unifying crop certification framework available that can integrate various crop certification standards based on their jurisdiction, leading to farmers becoming not interested or discouraged to implement the Certification process, more so because farmers often get confused with the available multiple type of crop certification standards such as Good Agricultural Practices (GAP), Better Cotton Initiatives (BCI), International Food Standards (IFS), Round Table Responsible Soy (RTRS), Safe Quality Food (SQF), British Retail Consortium Standard (BRC), ISO 22000 etc. It is also observed that because of lack of an integrated system for crop certification, there is an increased production cost mainly due to the processes involved such as record keeping, agro input/produce storage management, residue testing etc. Another challenge is the lack of access of management information system for crop certification process. Therefore there is a need for an integrated crop certification framework and a system to implement the framework that could be cost-effective and simplify the crop certification process for farmers.

### OBJECTIVES OF THE INVENTION

In accordance with the present invention, the primary objective is to provide a method and system for integrated crop quality management and crop certification.

Another object of the present disclosure is to provide a common compliance checklist across various standards in the integrated crop quality management system that would help in evolving a common pattern across crop standard.

Yet another object of the present disclosure is to provide an integrated crop certification system that can be used and accessed by all stakeholders involved in the crop certification process which can help stakeholders to communicate and provide recommendations in real-time.

Still another object of the present disclosure is to provide system that can assist farmers in selecting appropriate crop certification based on parameters entered by farmers such as location, soil health, type of crop etc.

Another object of the present disclosure is to provide an integrated framework and system that can collect data provided by the farmers to be processed to generate reports and analytics.

Yet another object of the present disclosure is to provide a system to create and customize automated crop protocol calendar based training module to train, monitor and follow-up with farmers.

Further object of the present disclosure is to provide a simplified network enabled communication device that allows an operator to remotely control data in digital format for review and validation of various crop certifications.

Other objects and advantages of the present invention will be more apparent from the following description when read in conjunction with the accompanying figures, which are not intended to limit the scope of the present disclosure.

### SUMMARY OF THE INVENTION

Before the present method, system, and hardware enablement are described, it is to be understood that this invention is not limited to the particular system, and methodology described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention which will be limited only by the appended claims.

The present application provides a method and system for integrated crop quality management and crop certification.

The present application provides a method for integrated crop quality management and crop certification, said method comprising processor implemented steps of selecting a geographical area for growing at least one crop using a network enabled communication module (212); auto assisting a user in selecting a crop certification pertaining to the selected geographical area based on a plurality of certification selection parameters using a certification selection module (214);generating a customized crop protocol and training calendar comprising a plurality of steps, based on the selected crop certification pertaining to the at least one crop using a training module (216);enabling implementation of the plurality of steps involved in growing the at least one crop in accordance with a plurality of crop compliance administrated by the crop certification pertaining to the selected geographical area using a crop compliance module (218);and adapting to a plurality of details pertaining to the plurality of crop compliance of the selected crop in the selected geographical area using an adaptation module (220);generating a plurality of periodic compliance alerts for different stages of the selected crop for growth monitoring using a compliance alert module (222); tracking a plurality of action items depicting goals on the generated periodic alerts to maintain a crop compliance business logic of the selected crop using a goal assessment module (224); generating a crop certification compliance score and index for the crop compliance certificate of the selected crop using a crop compliance certificate module (226);transferring the generated crop certification compliance score and index to the certifying agency for validating and generating a crop compliance certificate using the network enabled communication module (212).

The present application provides a system (102) for integrated crop quality management and crop certification, the system (102) comprising a processor; a data bus coupled to said processor; and a computer-usable medium embodying computer code, said computer-usable medium being coupled to said data bus, said computer program code comprising instructions executable by said processor and configured for executing a network enabled communication module (212) adapted for selecting a geographical area for growing at least one crop; a certification selection module (214) adapted for auto assisting a user in selecting an crop certification pertaining to the selected geographical area based on a plurality of certification selection parameter; a training module (216) adapted for generating a customized crop protocol and training calendar comprising a plurality of steps, based on the selected crop certification pertaining to the at least one crop; a crop compliance module (218) adapted for implementing the plurality of steps involved in growing the at least one crop in accordance with a plurality of crop compliance administrated by the crop certification pertaining to the selected geographical area; an adaptation module (220) adapting to a plurality of details pertaining to the plurality of crop compliance of the selected crop in the selected geographical area; a compliance alert module (222) adapted for generating a plurality of periodic compliance alerts for different stages of the selected crop for growth monitoring; a goal assessment module (224) adapted for tracking a plurality of action items depicting goals on the generated periodic alerts to maintain a crop compliance business logic of the selected crop; a crop compliance certificate module (226) adapted for generating a crop certification compliance score and index for a crop compliance certificate of the selected crop; and the network enabled communication module (212) adapted for transferring the generated crop certification compliance score and index to the certifying agency for validating and generating a crop compliance certificate.

### BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:
Figure 1 illustrates a network implementation of a system for integrated crop quality management and crop certification, in accordance with an embodiment of the present disclosure;
Figure 2 illustrates a system architecture, in accordance with an embodiment of the present disclosure;
Figure 3 illustrates an exemplary flow diagram illustrating a method for integrated crop quality management and crop certification.

### DETAILED DESCRIPTION OF THE INVENTION

Some embodiments of this invention, illustrating all its features, will now be discussed in detail.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The disclosed embodiments are merely exemplary of the invention, which may be embodied in various forms.

The elements illustrated in the Figures inter-operate as explained in more detail below. Before setting forth the detailed explanation, however, it is noted that all of the discussion below, regardless of the particular implementation being described, is exemplary in nature, rather than limiting. For example, although selected aspects, features, or components of the implementations are depicted as being stored in memories, all or part of the systems and methods consistent with the attrition warning system and method may be stored on, distributed across, or read from other machine-readable media.

The techniques described above may be implemented in one or more computer programs executing on (or executable by) a programmable computer including any combination of any number of the following: a processor, a storage medium readable and/or writable by the processor (including, for example, volatile and non-volatile memory and/or storage elements), plurality of input units, and plurality of output devices. Program code may be applied to input entered using any of the plurality of input units to perform the functions described and to generate an output displayed upon any of the plurality of output devices.

Each computer program within the scope of the claims below may be implemented in any programming language, such as assembly language, machine language, a high-level procedural programming language, or an object-oriented programming language. The programming language may, for example, be a compiled or interpreted programming language. Each such computer program may be implemented in a computer program product tangibly embodied in a machine-readable storage device for execution by a computer processor.

Method steps of the invention may be performed by one or more computer processors executing a program tangibly embodied on a computer-readable medium to perform functions of the invention by operating on input and generating output. Suitable processors include, by way of example, both general and special purpose microprocessors. Generally, the processor receives (reads) instructions and data from a memory (such as a read-only memory and/or a random access memory) and writes (stores) instructions and data to the memory. Storage devices suitable for tangibly embodying computer program instructions and data include, for example, all forms of non-volatile memory, such as semiconductor memory devices, including EPROM, EEPROM, and flash memory devices; magnetic disks such as internal hard disks and removable disks; magneto-optical disks; and CD-ROMs. Any of the foregoing may be supplemented by, or incorporated in, specially-designed ASICs (application-specific integrated circuits) or FPGAs (Field-Programmable Gate Arrays). A computer can generally also receive (read) programs and data from, and write (store) programs and data to, a non-transitory computer-readable storage medium such as an internal disk (not shown) or a removable disk.

Any data disclosed herein may be implemented, for example, in one or more data structures tangibly stored on a non-transitory computer-readable medium. Embodiments of the invention may store such data in such data structure(s) and read such data from such data structure(s).

The present disclosure envisages an integrated crop quality management system and method for a cost effective and simplified crop certification process. Typically, the system could be integrated with network enabled communication devices, such as smartphones, tablets, and personal digital assistant (PDAs) that can be used for automated monitoring and assessment of crop production cycle and post-harvest management.

According to the present disclosure, the invention relates to an integrated crop quality management system which is an automated system framework suited to simplify various regional / crop specific crop cultivation standards. The framework could be adaptable to one or more network enabled monitoring devices that can be operated from a remote location such that a farmer growing a crop could follow the crop stage based recommendations provided by the automated system framework. This decreases the number of surveys that a crop certification auditor or inspector carries out in a given time interval, which in turn benefits the farmer in taking quick decisions.

The network enabled monitoring system framework envisaged by the present disclosure is configured to comply with crop certification standards of any region, by altering/tweaking major tests and threshold levels of the agro input, to suit a specific region. This provides the farmers/growers access to varied markets through a single framework. Based on the region, the farmer/grower can quickly select the appropriate parameters such as location, health of the soil, type of crop, market linkage requirement, export market, certification support available in the farmer/grower location. Once the farmer/grower selects a particular location, critical parameters related to crop certification for that particular location will be automatically generated by the automated system which includes an automated crop protocol calendar that assesses and provides information to farmer/grower on the necessary trainings, proper alerts on the steps involved for growing particular crop at that particular location, monitoring the status of the crop and necessary follow-ups. Typically, the assessment data generated by the automated system tends to be accurate as compared to the data collected manually. Frequency of the assessment and validity checks are also higher when the automated system is used. Additionally, use of the automated system provides flexibility to monitor/check status of the crop, whenever needed.

The crop monitoring and certification system envisaged in the present disclosure is operated / controlled by an operator. Actual real-time position of the crop standard and pattern is updated continuously on virtual environment and maintained in a database (mobile/server). The operator can run the network enabled crop monitoring device in an autonomous or tele-operated mode depending on the situation. For example, at a particular time, a farmer at a particular location may like to check nature of soil, crop variety, and may provide certain parameters to be captured such as date of sowing, agro input history etc. A crop certification auditor at another location may check the details provided by the farmer instantly and based on the data captured by the farmer. The crop certification auditor may share periodic alerts on the crop compliance, necessary actions to be taken by the farmer at a certain point of time. The data captured by such network enabled monitoring system will provide a complete view of a particular crop standard and users (farmers / crop certification auditors) can share periodic alerts on the crop compliance, necessary actions to be taken, and also enables to track the pending activities by respective stakeholders

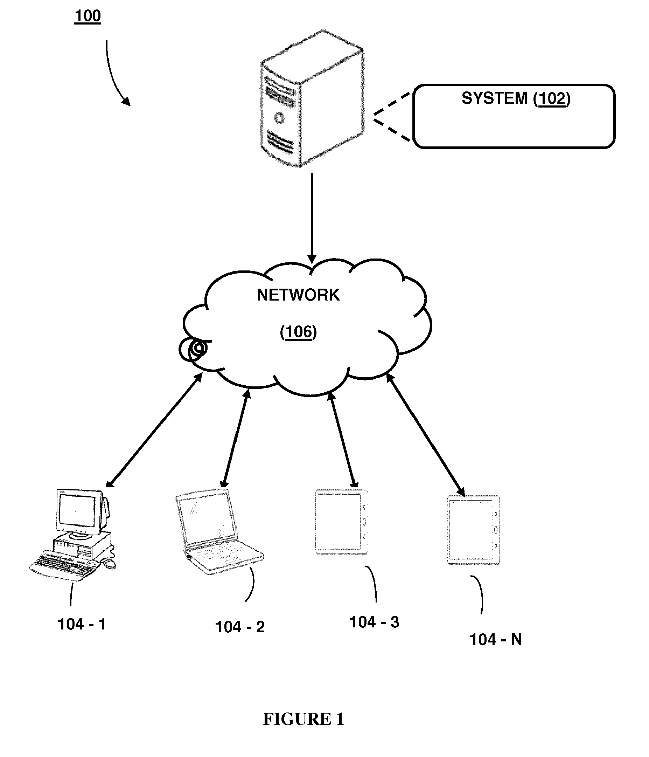

Referring now to the drawings, Figure 1 illustrates a network implementation 100 of a system 102 for integrated crop quality management and crop certification, in accordance with an embodiment of the present disclosure. Although the present disclosure is explained by considering that system 102 is implemented as a software application on a server, it may be understood that system 102 may also be implemented in a variety of computing systems, such as a laptop computer, a desktop computer, a notebook, a workstation, a mainframe computer, a server, a network server, cloud, hand-held device and the like. It will be understood that system 102 may be accessed by multiple consumers through one or more user devices 104-1, 104-2...104-N, collectively referred to as user devices 104 hereinafter, or applications residing on user devices 104. Examples of user devices 104 may include, but are not limited to, a portable computer, a personal digital assistant, a hand-held device, and a workstation. The user devices 104 are communicatively coupled to system 102 through network 106.

In one implementation, network 106 may be a wireless network, a wired network or a combination thereof. Network 106 can be implemented as one of the different types of networks, such as intranet, local area network (LAN), wide area network (WAN), the internet, and the like. Network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further network 106 may include a variety of network devices, including routers, bridges, servers, computing devices, storage devices, and the like.

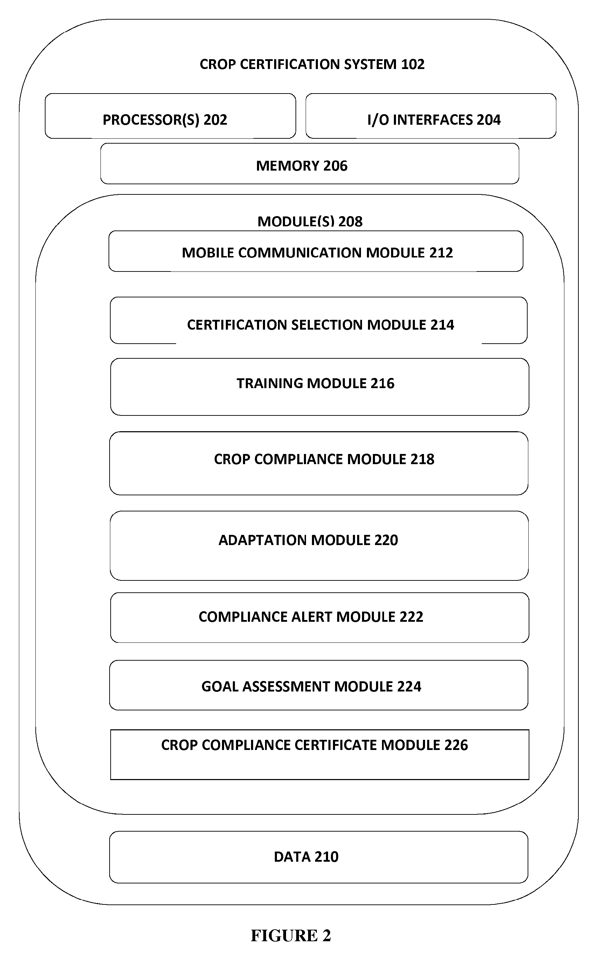

Referring to Figure 2 is a block diagram illustrating system architecture, for integrated crop quality management and crop certification.

In an embodiment of the present invention, a system (102) is provided for integrated crop quality management and crop certification. The system (102) comprises of a network enabled communication module (212) ; a certification selection module (214); a training module (216); a crop compliance module (218); an adaptation module (220); a compliance alert module (222); a goal assessment module (224); a crop compliance certificate module (226).

In another embodiment of the present invention, a network enabled communication module (212) is adapted for selecting a geographical area for growing a crop. The network enabled communication module (212) may be actuated using a communicatively coupled network enabled mobile communication device, wherein said network enabled mobile communication device is selected from a group comprising but not limited to smartphones, tablets, personal digital assistant (PDAs), hand-held devices, laptops and portable computers.

In another embodiment of the present invention, a certification selection module (214) is adapted for auto assisting a user in selecting a crop certification of the geographical area based on the certification selection parameter. The certification selection parameters are location, soil health, market linkage requirement, export market, user region, certification support available in a region, weather prediction, financial parameters, environmental parameters, regulatory parameters.

In another embodiment of the present invention, a training module (216) is adapted for generating a customized crop protocol and training calendar comprising a plurality of steps, based on the selected crop certification pertaining to the crop.

In another embodiment of the present invention, a crop compliance module (218) is adapted for implementing the plurality of steps involved in growing the crop in accordance with a plurality of crop compliance administrated by the crop certification pertaining to the selected geographical area. The crop compliance module comprises of stages of various crops, steps involved in growing the crop, parameters for growing the crop, parameter value range, constrains. The parameters for growing the crop are selected from a group comprising of land ploughing, fertilizing, watering, sowing, disease management, harvesting, irrigation, nutrient management. The various parameters that may be captured at any given stage may include a) Land Preparation wherein the land is prepared by ploughing, adding fertilizers/nutrients, required watering etc., based on the crop that needs to be cultivated Other parameters related to Sowing/Seeding of the crop, Irrigation, Fertilizer/Nutrient Management, protection of Crop, Disease Management, and Harvesting, are also included in the Crop Compliance Module.

In another embodiment of the present invention, an adaptation module (220) is adapting to a plurality of details pertaining to the plurality of crop compliance of the selected crop in the selected geographical area. The compliance of specific crop comprises of type of crop, date of sowing, agro input history, fertilizer type, expiry date of fertilizer, source of water and labor, potential markets. It covers a specific region, a specific crop, specific stage of the crop. It may be used in combination with the crop compliance module to obtain a complete overview of a particular crop standard. Basic data in the form of parameters, questionnaires are collected that includes location of the pesticide, type of crop, date of sowing, agro input history, type of pesticide/fertilizer, expiry date of the pesticide/fertilizer, source of water & labor, potential markets where the food may be exported etc. The adaptation module (220) thus helps in capturing compliances related to pesticides and/or medicines, through network enabled communication devices and may be shared to auditors.

In another embodiment of the present invention, a compliance alert module (222) adapted for generating a plurality of periodic compliance alerts for different stages of the selected crop for growth monitoring. The periodic compliance alerts are generated to the communication device and comprises of profile characteristics as number of a pending action, a priority of each pending action, an impact of delay of the said pending action item. The personalized crop compliance alert module (218), based on the data captured, may share the periodic alerts on the crop compliance, any specific actions to be taken or validated etc. It ensures workflow completion as well as could track any pending activities and/or reminders. The reports generated by the modules through the network enabled monitoring device assist in checking in compliance level by the farmer and crop certification auditor. The compliance level checks may include profile characteristics such as number of pending actions, priority of each pending action, delay of each pending action, if any, and the impact of delay of each pending action. Accordingly, the pending actions could be segregated in buckets such as follower, needs proper attention / training / guidance etc.

In another embodiment of the present invention, a goal assessment module (224) adapted for tracking a plurality of action items depicting goals on the generated periodic alerts to maintain a crop compliance business logic of the selected crop. A summarized goal sheet against each stakeholder (farmer / crop certification auditor) can be provided on a daily basis or periodic basis which is then processed in order to generate several analytics. These analytics could be useful in carrying out frequent checks which in turn would alert on any pending actions and action could be taken in quick time.

In another embodiment of the present invention, a crop compliance certificate module (226) is adapted for generating a crop certification compliance score and index for a crop compliance certificate of the selected crop.

In another embodiment of the present invention, a network enabled communication module is adapted for transferring the generated crop certification compliance score and index for validating and generating a crop compliance certificate to the certifying agency

In another embodiment of the present invention, a crop quality management and crop certification system (102) adapted for receiving the validated generated certificate.

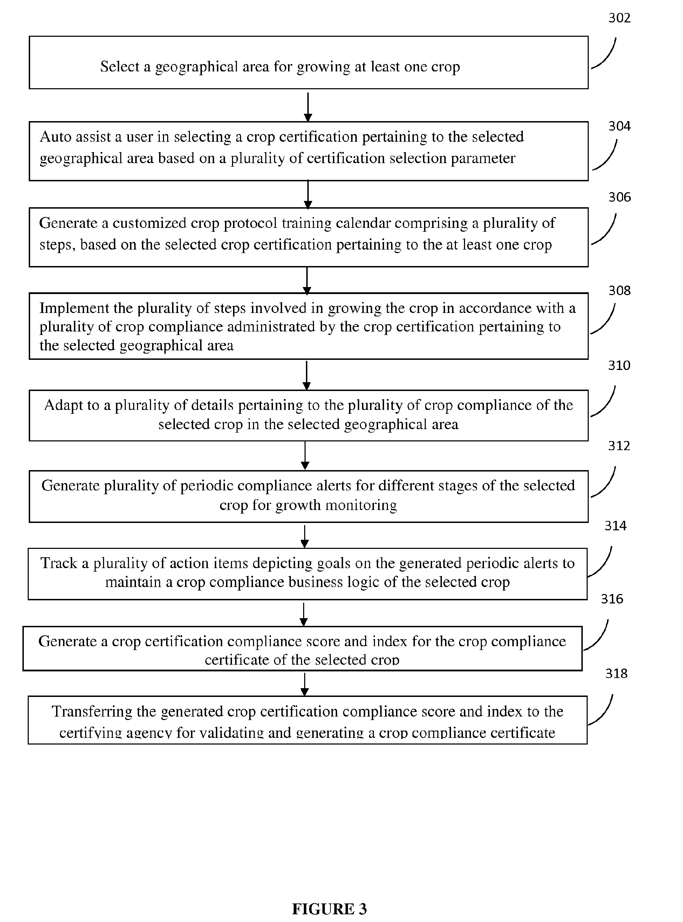

Referring to Figure 3 is an exemplary flow diagram illustrating a method for integrated crop quality management and crop certification.

The process starts at step 302, by selecting a geographical area for growing at least one crop using a network enabled communication module (212). At step 304, a certification selection module (214) auto assists a user to select a crop certification pertaining to the selected geographical area based on a plurality of certification selection parameter using; At step 306, a training module (216);generate a customized crop protocol training calendar comprising a plurality of steps, based on the selected crop certification pertaining to the at least one crop using; At step 308, a crop compliance module (218) implements the plurality of steps involved in growing the at least one crop in accordance with a plurality of crop compliance administrated by the crop certification pertaining to the selected geographical area; At step 310, an adaptation module (220) adapting to a plurality of details pertaining to the plurality of crop compliance of the selected crop in the selected geographical area; At step 312, a compliance alert module (222) generates a plurality of periodic compliance alerts for different stages of the selected crop for growth monitoring, At step 314, a goal assessment module (224) tracks a plurality of action items depicting goals on the generated periodic alerts to maintain a crop compliance business logic of the selected crop using ;at step 316, a crop compliance certificate module (226) generates a crop certification compliance score and index for the crop compliance certificate of the selected crop; and lastly at step 318 a network enabled communication device transfers the generated crop certification compliance score and index to the certifying agency for validating and generating a crop compliance certificate.

The written description describes the subject matter herein to enable any person skilled in the art to make and use the embodiments of the invention. The scope of the subject matter embodiments defined here may include other modifications that occur to those skilled in the art. Such other modifications are intended to be within the scope if they have similar elements that do not differ from the literal language of the claims or if they include equivalent elements with insubstantial differences from the literal language.

It is, however to be understood that the scope of the protection is extended to such a program and in addition to a computer-readable means having a message therein; such computer-readable storage means contain program-code means for implementation of one or more steps of the method, when the program runs on a server or network enabled communication device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the invention may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules comprising the system of the present disclosure and described herein may be implemented in other modules or combinations of other modules. For the purposes of this description, a computer usable or computer readable medium can be any apparatus that can comprise, store, communicate, propagate, or transport the program for use by or in connection with the instruction execution system, apparatus, or device. The various modules described herein may be implemented as either software and/or hardware modules and may be stored in any type of non-transitory computer readable medium or other storage device. Some non-limiting examples of non-transitory computer-readable media include CDs, DVDs, BLU-RAY, flash memory, and hard disk drives.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A method for integrated crop quality management and crop certification, said method comprising processor implemented steps of:
a. selecting a geographical area for growing at least one crop using a network enabled communication module (212);
b. auto assisting a user in selecting a crop certification pertaining to the selected geographical area based on a plurality of certification selection parameters using a certification selection module (214);
c. generating a customized crop protocol and training calendar comprising a plurality of steps, based on the selected crop certification pertaining to the at least one crop using a training module (216);
d. enabling implementation of the plurality of steps involved in growing the at least one crop in accordance with a plurality of crop compliance administrated by the crop certification pertaining to the selected geographical area using a crop compliance module (218); and adapting to a plurality of details pertaining to the plurality of crop compliance of the selected crop in the selected geographical area using an adaptation module (220);
e. generating a plurality of periodic compliance alerts for different stages of the selected crop for growth monitoring using a compliance alert module (222);
f. tracking a plurality of action items depicting goals on the generated periodic alerts to maintain a crop compliance business logic of the selected crop using a goal assessment module (224);
g. generating a crop certification compliance score and index for the crop compliance certificate of the selected crop using a crop compliance certificate module (226);
h. transferring the generated crop certification compliance score and index to the certifying agency for validating and generating a crop compliance certificate using the network enabled communication module (212).

2. The method as claimed in claim 1, wherein the plurality of certification selection parameters are selected from a group comprising of location, soil health, market linkage requirement, export market, user region, certification support available in a region, weather prediction, financial parameters, environmental parameters, regulatory parameters and a combination thereof.

3. The method as claimed in claim 1, wherein the crop compliance module comprises of stages of various crops, steps involved in growing the crop, parameters for growing the crop, parameter value range , constrains and a combination thereof.

4. The method as claimed in claim 3, wherein the parameters for growing the crop are selected from a group comprising of land ploughing, fertilizing, watering, sowing, disease management, harvesting, irrigation, nutrient management and a combination thereof.

5. The method as claimed in claim 1, wherein the details pertaining to the compliance of specific crop comprises of type of crop, date of sowing, agro input history, fertilizer type, expiry date of fertilizer, source of water and labor, potential markets and a combination thereof.

6. The method as claimed in claim 1, wherein the compliance related to the plurality of crop certificates are stored in a server.

7. The method as claimed in claim 1, wherein the periodic compliance alerts are generated to the network enabled communication module.

8. The method as claimed in claim 7, wherein the periodic compliance alerts comprises of profile characteristics as number of a pending action, a priority of each pending action, an impact of delay of the said pending action item and a combination thereof.

9. The method as claimed in claim1, wherein the plurality of action items are audited to maintain a crop compliance business logic of the selected crop.

10. The method as claimed in claim 1, further comprises of validating and generating a crop compliance certificate by the certifying agency and subsequently receiving the validated generated certificate.

11. A system (102) for integrated crop quality management and crop certification, the system (102) comprising:
a. a processor;
b. a data bus coupled to said processor; and
c. a computer-usable medium embodying computer code, said computer-usable medium being coupled to said data bus, said computer program code comprising instructions executable by said processor and configured for executing:
a network enabled communication module (212) adapted for selecting a geographical area for growing at least one crop;
a certification selection module (214) adapted for auto assisting a user in selecting an crop certification pertaining to the selected geographical area based on a plurality of certification selection parameter;
a training module (216) adapted for generating a customized crop protocol and training calendar comprising a plurality of steps, based on the selected crop certification pertaining to the at least one crop;
a crop compliance module (218) adapted for enabling implementation of the plurality of steps involved in growing the at least one crop in accordance with a plurality of crop compliance administrated by the crop certification pertaining to the selected geographical area;
an adaptation module (220) adapted for adapting to a plurality of details pertaining to the plurality of crop compliance of the selected crop in the selected geographical area;
a compliance alert module (222) adapted for generating a plurality of periodic compliance alerts for different stages of the selected crop for growth monitoring;
a goal assessment module (224) adapted for tracking a plurality of action items depicting goals on the generated periodic alerts to maintain a crop compliance business logic of the selected crop;
a crop compliance certificate module (226) adapted for generating a crop certification compliance score and index for a crop compliance certificate of the selected crop; and
the network enabled communication module (212) adapted for transferring the generated crop certification compliance score and index to the certifying agency for validating and generating a crop compliance certificate.

12. The system as claimed in claim 11, further comprises of a data repository configured to store information pertaining to a plurality of crop compliance and crop certification.

13. The system as claimed in claim 11, wherein the adaptation module provides accessibility to compliance in various local regional languages.
